# EUROPEAN PATENT SPECIFICATION

(11) **EP 4 391 173 B1**
(45) Date of publication and mention of the grant of the patent: **02.12.2026**
(21) Application number: 23218842.5
(22) Date of filing: 20.12.2023
(51) Int. Cl.: H01M 50/204, H01M 50/207, H01M 50/503

(54) **BATTERY PACK WITH TERMINALS**
BATTERIEPACK MIT ANSCHLÜSSEN
BLOC-BATTERIE AVEC BORNES

(30) Priority: 23.12.2022 US 202263435006 P
(43) Date of publication of application: 26.06.2024
(73) Proprietor: Milwaukee Electric Tool Corporation, Brookfield, WI 53005 (US)
(72) Inventor: GOLBA, Thomas, Brookfield, WI 53005 (US); GUDIMANI, Gurusiddeshwar, Plymouth, WI 53073 (US); LOCATI, Ron, Brookfield, WI 53005 (US); FORTUNA, Jon, Brookfield, WI 53005 (US)
(74) Representative: Forresters IP LLP

(56) References cited:
- CN-A- 109 378 423
- US-A1- 2020 161 609

## Description

### FIELD

The disclosure relates to power tools, and more particularly to battery packs having a communication terminal for communication with the power tool while connected to the power tool.

Example prior art devices are disclosed in CN109378423 and US2020161609.

### SUMMARY

Embodiments of the disclosure include a battery pack having one or more terminals that facilitate electrical connection between a battery pack and a tool through the terminal.

In some aspects, the techniques described herein relate to a battery pack for powering a tool, the battery pack including: a housing supporting a plurality of battery cells; and a battery terminal for electrically connecting the battery pack to the tool, the battery terminal including, a spine extending along an axis, a first arm coupled to the spine, a second arm coupled to the spine, wherein the first arm and the second arm are configured to receive a tool terminal of the tool therebetween, and wherein the first arm and the second arm extend along a direction perpendicular to the axis, and a base coupled to the first arm and/or the second arm, the base electrically connected to the plurality of battery cells.

In some aspects, the techniques described herein relate to a battery pack for powering a tool, the battery pack including: a housing supporting a plurality of battery cells; and a battery terminal for electrically connecting the battery pack to the tool, the battery terminal having, a spine extending along an axis, a first arm coupled to the spine, a second arm coupled to the spine, wherein the first arm and the second arm are configured to receive a tool terminal of the tool therebetween, and wherein the first arm and the second arm extend along a direction parallel to the axis, and a base coupled to the first arm and/or the second arm, the base electrically connected to the plurality of battery cells.

In some aspects, the techniques described herein relate to a battery pack for powering a tool, the battery pack including: a housing supporting a plurality of battery cells; and a battery terminal for electrically connecting the battery pack to the tool, the battery terminal having, a spine extending along an axis, a first arm coupled to the spine and including a first proximal end and a first distal end, and wherein the first arm is connected to the spine at the proximal end, and wherein the first arm includes a curvature nearer to the distal end than to the proximal end a second arm coupled to the spine, wherein the first arm and the second arm are configured to receive a tool terminal of the tool therebetween, a base coupled to the first arm and/or the second arm, the base electrically connected to the plurality of battery cells, wherein the curvature defines a face pointing in a direction toward the axis.

In some aspects, the techniques described herein relate to a battery pack for powering a tool, the battery pack comprising:
a housing supporting a plurality of battery cells; and
a battery terminal for electrically connecting the battery pack to the tool, the battery terminal including,
   a spine extending along an axis,
   a first arm coupled to the spine,
   a second arm coupled to the spine, wherein the first arm and the second arm are configured to receive a tool terminal of the tool therebetween, and wherein the first arm and the second arm extend along a direction perpendicular to the axis, and
   a base coupled to the first arm and/or the second arm, the base electrically connected to the plurality of battery cells.

The first arm may include a first pair of fingers, and the second arm may include a second pair of fingers.

The first pair of fingers may be in contact with the second pair of fingers at a connection point.

The first arm and the second arm may extend between a proximal end and a distal end, and wherein a distance between the first arm and the second arm at the proximal end may be greater than a distance between the first arm and the second arm at the distal end.

The first arm may be in contact with the second arm at a connection point, and wherein the connection point is proximate the distal end.

The spine may include a first side and a second side, and wherein the first side may be parallel with the second side.

The first arm may be integrally formed with the first side of the spine and the second arm may be integrally formed with the second side of the spine.

The base may include a first base wall and a second base wall, and wherein the first base wall may be integrally formed with the first side of the spine and the second base wall may be integrally formed with the second side of the spine.

In some aspects, the techniques described herein relate to a battery pack for powering a tool, the battery pack comprising:
a housing supporting a plurality of battery cells; and
a battery terminal for electrically connecting the battery pack to the tool, the battery terminal having,
   a spine extending along an axis,
   a first arm coupled to the spine,
   a second arm coupled to the spine, wherein the first arm and the second arm are configured to receive a tool terminal of the tool therebetween, and wherein the first arm and the second arm extend along a direction parallel to the axis, and
   a base coupled to the first arm and/or the second arm, the base electrically connected to the plurality of battery cells.

The first arm may include a first pair of fingers, and the second arm may include a second pair of fingers.

The first pair of fingers may be in contact with the second pair of fingers at a connection point.

The first arm and the second arm may extend between a proximal end and a distal end, and wherein a distance between the first arm and the second arm at the proximal end may be greater than a distance between the first arm and the second arm at the distal end.

The first arm may be in contact with the second arm at a connection point, and wherein the connection point may be proximate the distal end.

The spine may include a first side and a second side, and wherein the first side may be parallel with the second side.

The first arm may be integrally formed with the first side of the spine and the second arm may be integrally formed with the second side of the spine.

The base may include a first base wall and a second base wall, and wherein the first base wall may be integrally formed with the first side of the spine and the second base wall may be integrally formed with the second side of the spine.

In some aspects, the techniques described herein relate to a battery pack for powering a tool, the battery pack comprising:
a housing supporting a plurality of battery cells; and
a battery terminal for electrically connecting the battery pack to the tool, the battery terminal having,
   a spine extending along an axis,
   a first arm coupled to the spine and including a first proximal end and a first distal end, and wherein the first arm is connected to the spine at the proximal end, and wherein the first arm includes a curvature nearer to the distal end than to the proximal end,
   a second arm coupled to the spine, wherein the first arm and the second arm are configured to receive a tool terminal of the tool therebetween, and
   a base coupled to the first arm and/or the second arm, the base electrically connected to the plurality of battery cells,
wherein the curvature defines a face pointing in a direction toward the axis.

The spine may include a first side and a second side, and wherein the first side may be parallel with the second side.

The base may be integrally formed with the first side of the spine, and wherein the base may extend in a direction perpendicular to the axis toward the second side.

The base may be integrally formed with the second side of the spine, and wherein the base may extend in a direction perpendicular to the axis toward the first side.

Other features and aspects of the disclosure will become apparent by consideration of the following detailed description and accompanying drawings.

### BRIEF DESCRIPTION OF THE DRAWINGS

FIG. 1 illustrates a perspective view of a battery pack according to an embodiment of the present disclosure.
FIG. 2 is a side view of the battery pack illustrated in FIG. 1.
FIG. 3 is a front view of the battery pack illustrated in FIG. 1.
FIG. 4 is a top view of the battery pack illustrated in FIG. 1.
FIG. 5A is a perspective view of a terminal of the battery pack illustrated in FIG. 1.
FIG. 5B is a bottom perspective view of the terminal illustrated in FIG. 5A.
FIG. 5C is a side view of the terminal illustrated in FIG. 5A.
FIG. 6 is a perspective view of the terminal illustrated in FIG. 5A in a displaced position.
FIG. 7A is a graph showing a force required to displace fingers of the terminal illustrated in FIG. 5A.
FIG. 7B is a graph showing a force required to displace fingers of the terminal illustrated in FIG. 5A when the terminal is composed of an alternative material.
FIG. 7C is a graph showing strain on fingers based on a displacement of the fingers of the terminal illustrated in FIG. 5A.
FIG. 8A is a perspective view of a terminal of the battery pack illustrated in FIG. 1, according to another embodiment of the disclosure.
FIG. 8B is a bottom perspective view of the terminal illustrated in FIG. 8A.
FIG. 8C is a top view of the terminal illustrated in FIG. 8A.
FIG. 8D is a front enlarged view of the terminal illustrated in FIG. 8A.
FIG. 9 is a perspective view of the terminal illustrated in FIG. 8A in a displaced position.
FIG. 10A is a graph showing a force required to displace fingers of the terminal illustrated in FIG. 8A.
FIG. 10B is a graph showing strain on fingers based on a displacement of the fingers of the terminal illustrated in FIG. 8A.
FIG. 11A is a perspective view of a terminal of the battery pack illustrated in FIG. 1, according to another embodiment of the disclosure.
FIG. 11B is a bottom perspective view of the terminal illustrated in FIG. 11A.
FIG. 11C is a side view of the terminal illustrated in FIG. 11A.
FIG. 12 is a perspective view of the terminal illustrated in FIG. 11A in a displaced position.
FIG. 13A is a graph showing a force required to displace fingers of the terminal illustrated in FIG. 11A.
FIG. 13B is a graph showing a force required to displace fingers of the terminal illustrated in FIG. 11A when the terminal is composed of an alternative material.
FIG. 13C is a graph showing strain on fingers based on a displacement of the fingers of the terminal illustrated in FIG. 11A.
FIG. 14 is a perspective view of a terminal of the battery pack illustrated in FIG. 1, according to another embodiment of the disclosure.
FIG. 15 is a perspective view of the terminal illustrated in FIG. 14 in a displaced position.
FIG. 16A is a graph showing a force required to displace fingers of the terminal illustrated in FIG. 14.
FIG. 16B is a graph showing strain on fingers based on a displacement of the fingers of the terminal illustrated in FIG. 14.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

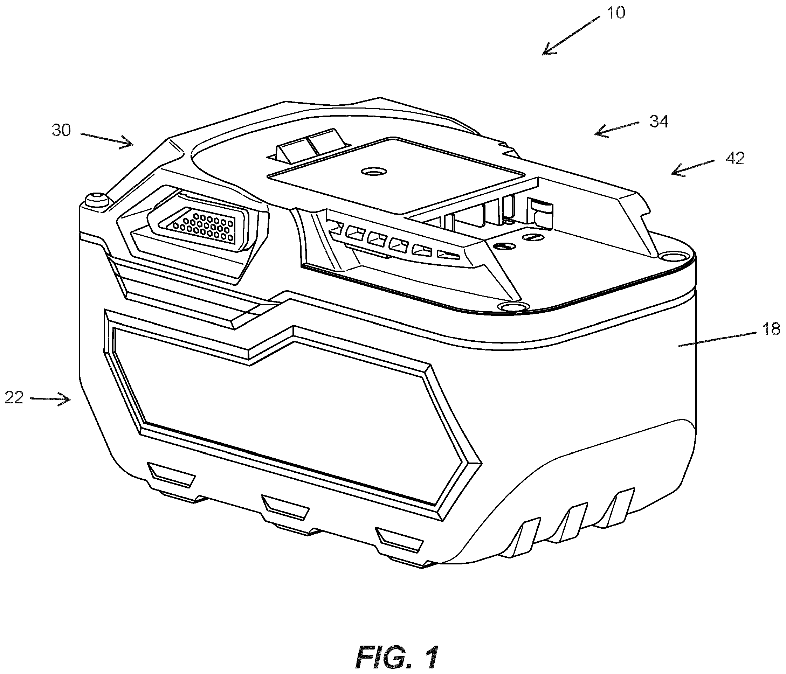

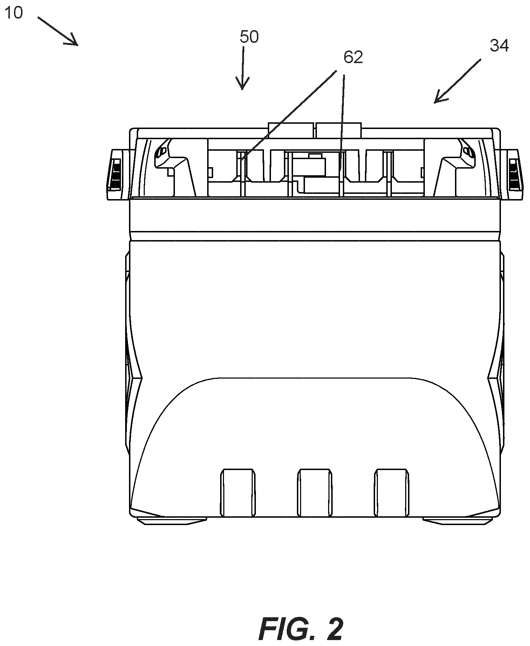

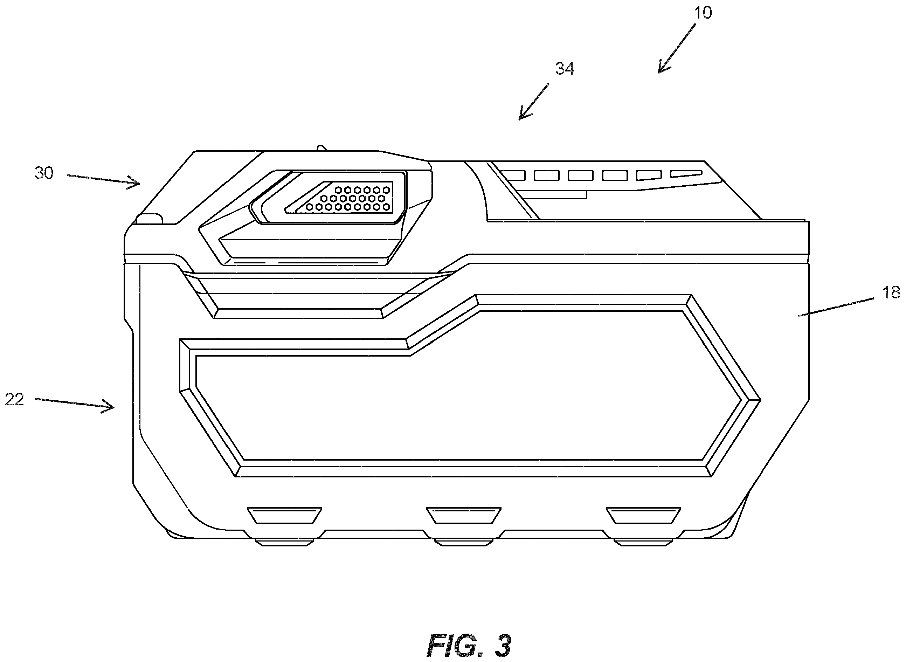

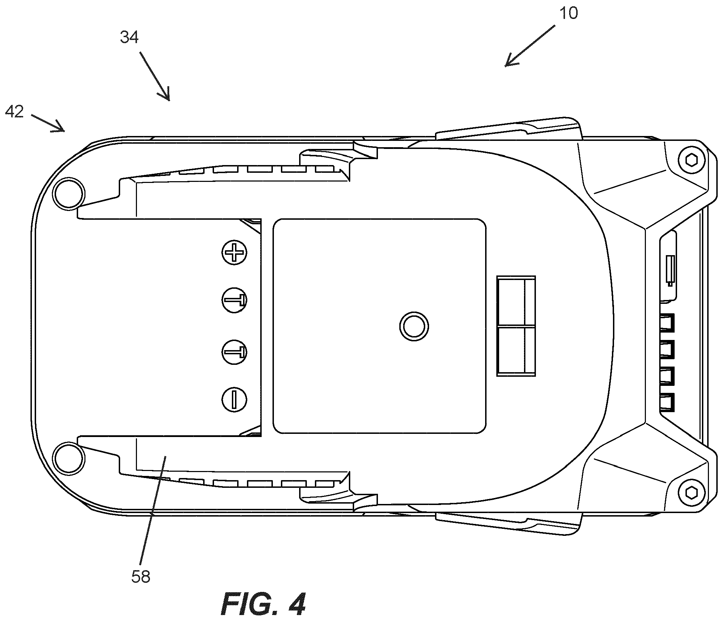

FIGS. 1-4 illustrate a battery pack 10 for coupling to a device, such as a power tool, to provide power to the device. The battery pack 10 is an exemplary embodiment of the disclosure. In other embodiments, the tool may be couplable to an alternative battery pack. The battery pack 10 includes a housing or main spine 18. The housing 18 generally includes a lower portion 22 that houses battery cells, and an upper portion 30. The upper portion 30 includes a device interface 34 configured to receive a device, a printed circuit board, and other electrical components. For example, the upper portion 30 of the main spine 18 can house a memory and an electronic processor for controlling communications between the battery pack 10 and the device. For example, the memory stores a plurality of battery discharge profiles for the battery pack to provide one of the discharge profiles to the power tool via the communication terminal to control how the battery cells are discharged based on the type of power tool that is coupled to the battery pack.

In some embodiments, the battery cells within the battery pack 10 are lithium-based battery cells having a chemistry of, for example, lithium-cobalt ("Li-Co"), lithium-manganese ("Li-Mn"), Li-Mn spinel, or another suitable lithium or lithium-based chemistry. The battery cells within the battery pack 10 provide operational power (e.g., voltage and current) to the power tool. In one embodiment, each battery cell has a nominal voltage of approximately 3.6V, such that the battery pack has a nominal voltage of approximately 18V. In other embodiments, the battery cells have different nominal voltages, such as, for example, between 3.6V and 4.2V, and the battery pack has a different nominal voltage, such as, for example, 10.8V, 12V, 14.4V, 24V, 28V, 36V, 50V, between 10.8V and 100V, etc. The battery cells also have a capacity of, for example, approximately between 1.0 Ah and 10.0Ah. In exemplary embodiments, the battery cells have capacities of approximately, 1.5Ah, 2.4Ah, 3.0Ah, 4.0Ah, between 1.0Ah and 10.0Ah, etc.

The device interface 34 on the battery pack 10 also includes a coupling mechanism 42 for selectively coupling the battery pack 10 to, or releasing the battery pack 10 from, the device. In the illustrated embodiment, the device interface 34 is connectable to a complementary battery pack interface on the device. The device interface 34 includes a combination of mechanical and electrical components configured to, and operable for, interfacing (e.g., mechanically, electrically, and communicatively connecting) the device with the battery pack 10.

The coupling mechanism 42 comprises a terminal block 50 including a plurality of battery terminals 62 operable to electrically connect to the battery cells within the battery pack 10. The plurality of battery terminals 62 includes, for example, a positive battery terminal, a ground terminal, and a sense terminal. The battery pack 10 is removably and interchangeably connected to the device 10 to provide operational power to the device 10. The battery terminals 62 are configured to mate with corresponding tool terminals extending from the device (e.g., within the battery pack interface). The battery pack 10 encloses and covers the terminals on the device when the battery pack 10 is connected to the battery pack interface. In other embodiment, the battery pack 10 may include an alternative coupling mechanism 42.

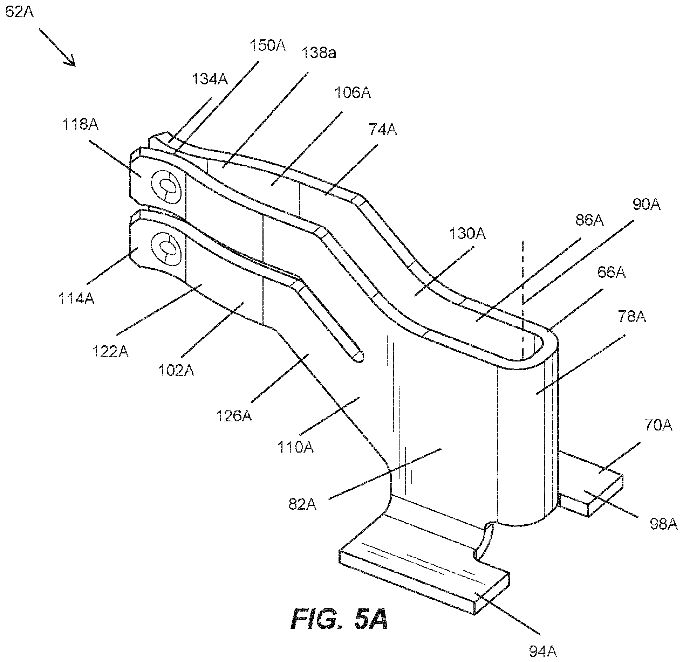

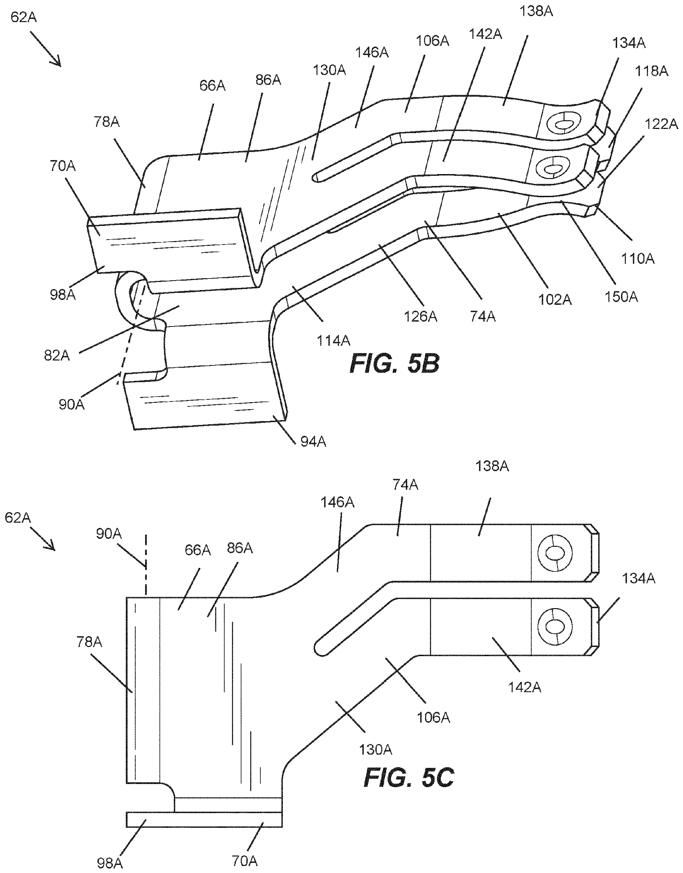

FIGS. 5A-5C, show the battery terminals 62 according to an embodiment of the disclosure. The battery terminals 62A include a spine 66A with a base 70A extending along a first plane perpendicular to the spine 66A, and a connection portion 74A extending along a second direction perpendicular to the first plane. The spine 66A is generally U-shaped, such that the spine 66A defines a back 78A, a first side 82A extending from the back 78A, and a second side 86A extending from the back 78A. The spine 66A extends along a first axis 90A that is perpendicular to the first plane and the second direction. The first side 82A and the second side 86A are parallel and extend in the second direction. In other embodiments, the spine 66A may form an alternative shape.

The base 70A includes a first base wall 94A and second base wall 98A. The first base wall 94A is integrally coupled to the first side 82A of the spine 66A and extends along the first plane in a fourth direction, away from the first side 82A. The second base wall 98A is integrally coupled to the second side 86A of the spine 66A and extends along the first plane in a fifth direction away from the second side 86A. The base 70A creates a flat surface to support the battery terminal 62A in an upright position. The base 70A may include mounting holes configured to couple the battery terminal 62A to the terminal block 50. In other embodiments, the base 70A may be laser welded onto the terminal block 50. In yet further embodiments, the base 70A may be coupled to the terminal block 50 with adhesive, traditional welding, or a similar coupling method.

The connection portion 74A includes a first arm 102A and a second arm 106A. The first arm 102A extends from a first proximal end 110A to a first distal end 114A in the second direction. The first arm 102A is integrally coupled to the first side 82A of the spine 66A at the first proximal end 110A. The first arm 102A is split such that a first pair of fingers 118A, 122A is defined. The first pair of fingers 118A, 122A includes a first top finger 118A and a first bottom finger 122A. The split is defined proximate the first proximal end 110A. The first arm 102A further includes an angled portion 126A that includes the first proximal end 110A. The first arm 102A, and therefore the first pair of fingers 118A, 122A, are angled relative to the second direction in the angled portion 126A. The first arm 102A, and therefore the first pair of fingers 118A, 122A, extend in the second direction between the angled portion 126A and the first distal end 114A.

The second arm 106A extends from a second proximal end 130A to a second distal end 134A in the second direction. The second arm 106A is integrally coupled to the second side 86A of the spine 66A at the second proximal end 130A. The second arm 106A is split such that a second pair of fingers 138A, 142A is defined. The second pair of fingers 138A, 142A includes a second top finger 138A and a second bottom finger 142A. The split is defined proximate the second proximal end 130A. The second arm 106A further includes an angled portion 146A that includes the second proximal end 130A. The second arm 106A, and therefore the second pair of fingers 138A, 142A, are angled relative to the second direction in the angled portion 146A. The second arm 106A, and therefore the second pair of fingers 138A, 142A, extend in the second direction between the angled portion 146A and the second distal end 134A. The connection portion 74A further includes a width defined between the first arm 102A and the second arm 106A. The width gradually decreases as the first and second arms 102A, 106A extend toward the second distal end 134A until the first and second arms 102A, 106A reach a connection point 150A. At the connection point 150A, the width is zero. Therefore, the first pair of fingers 118A, 122A and the second pair of fingers 138A, 142A are in contact at the connection point 150A. The connection point 150A is in close proximity with the second distal end 134A. Between the connection point 150A and the second distal end 134A, the first and second arms 102A, 106A flare away from each other. Therefore, at the second distal end 134A the width is greater than zero. However, the width between the first arm 102A and the second arm 106A is greater at the second proximal end 130A than at the second distal end 134A.

In some embodiments, the battery terminal 62A may be composed of an alloy, steel, or a similar metal. For example, the battery terminal 62A may be composed of C7035 alloy, C18080 alloy, high performance copper alloy, or the like.

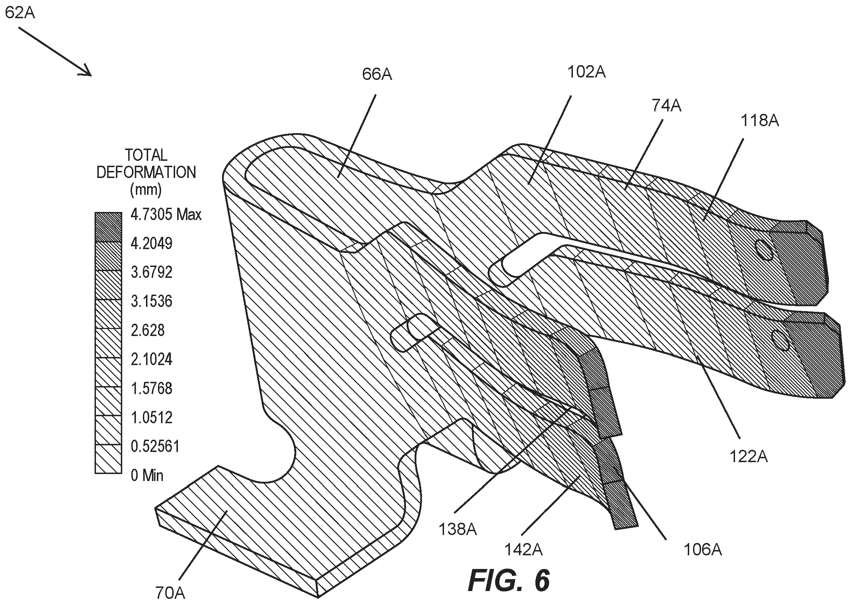

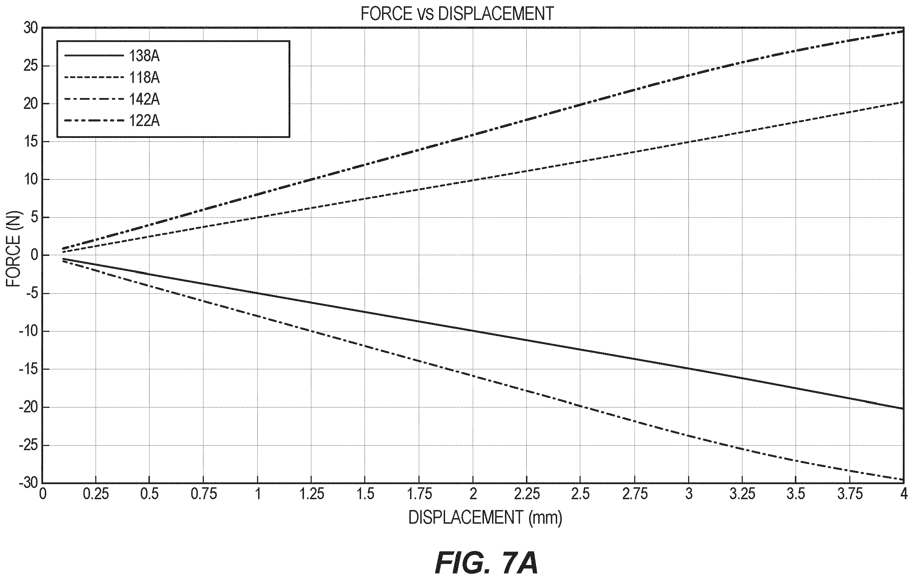

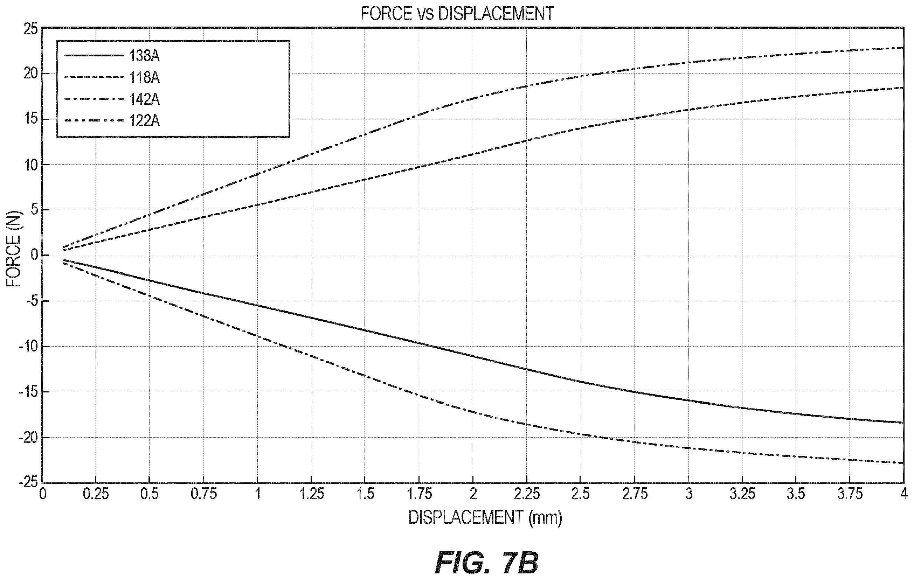

As shown in FIG. 6, the first and second pairs of fingers 118A, 122A, 138A, 142A are deformable. Deforming the fingers 118A, 122A, 138A, 142A allows the tool terminal of the tool to be inserted between the first arm 102A and the second arm 106A, creating an electrical connection between the battery 10 and the tool. As shown in the graph of FIG. 7A, the first and second pairs of fingers 118A, 122A, 138A, 142A are displaced different amounts in response to a force separating the first arm 102A from the second arm 106A. Specifically, the first top finger 118A and the second top finger 138A require less force than the first bottom finger 122A and the second bottom finger 142A in order to displace the fingers 118A, 122A, 138A, 142A the same amount. For example, when the battery terminal 62A is composed of 7035 alloy, to displace the fingers 118A, 122A, 138A, 142A 4mm, a force of approximately 20N must be applied to the first and second top fingers 118A, 138A and a force of approximately 30N must be applied to the first and second bottom fingers 122A, 142A. In other embodiments, different forces may be applied to displace the fingers 118A, 122A, 138A, 142A 4mm. More specifically, the composition of the battery terminal 62A may affect the force required to displace the fingers 118A, 122A, 138A, 142A. For example, FIG. 7B shows the displacement of the fingers 118A, 122A, 138A, 142A when the battery terminal 62A is composed of C18080 alloy. Here, to displace the fingers 118A, 122A, 138A, 142A 4mm, a force of approximately 23N must be applied to the first and second top fingers 118A, 138A and a force of approximately 18N must be applied to the first and second bottom fingers 122A, 142A.

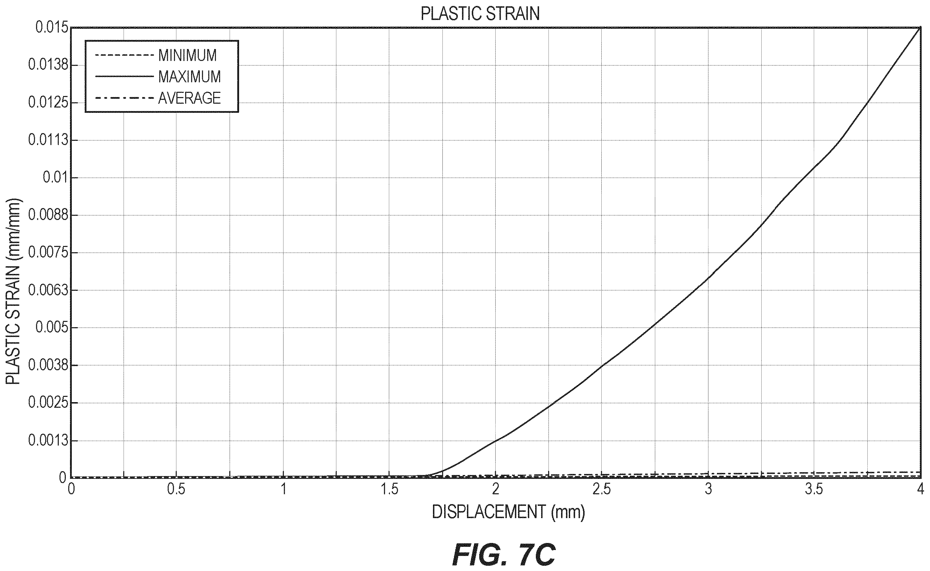

Further, as shown in the graph of FIG. 7C, for battery terminals 62A composed of 7035 alloy, the fingers 118A, 122A, 138A, 142A can be displaced up to 1.75mm without permanent deformation. Thereafter, strain on the fingers 118A, 122A, 138A, 142A increases as displacement increases, causing permanent deformation of the fingers 118A, 122A, 138A, 142A. In other embodiments, the amount of strain based on the displacement may differ. More specifically, the composition of the battery terminal 62A may affect the strain based on the displacement. For example, when the battery terminal 62A is composed of C18080 alloy, the fingers 118A, 122A, 138A, 142A can be displaced up to 1mm without permanent deformation. Thereafter, strain on the fingers 118A, 122A, 138A, 142A increases as displacement increases, causing permanent deformation of the fingers 118A, 122A, 138A, 142A.

To connect the battery terminal 62A to the tool, a blade of the tool terminal is inserted between the first arm 102A and the second arm 106A. Once the tool terminal is inserted, the first and second pairs of fingers 118A, 122A, 138A, 142A are in contact with the tool terminal. Specifically, the first and second pairs of fingers 118A, 122A, 138A, 142A are in contact with the tool terminal at the connection point 150A. Due to the tool terminal being in contact with the fingers 118A, 122A, 138A, 142A, the tool terminal is electrically connected to the battery terminals 62A. Therefore, the tool is electrically connected to the battery terminals 62A.

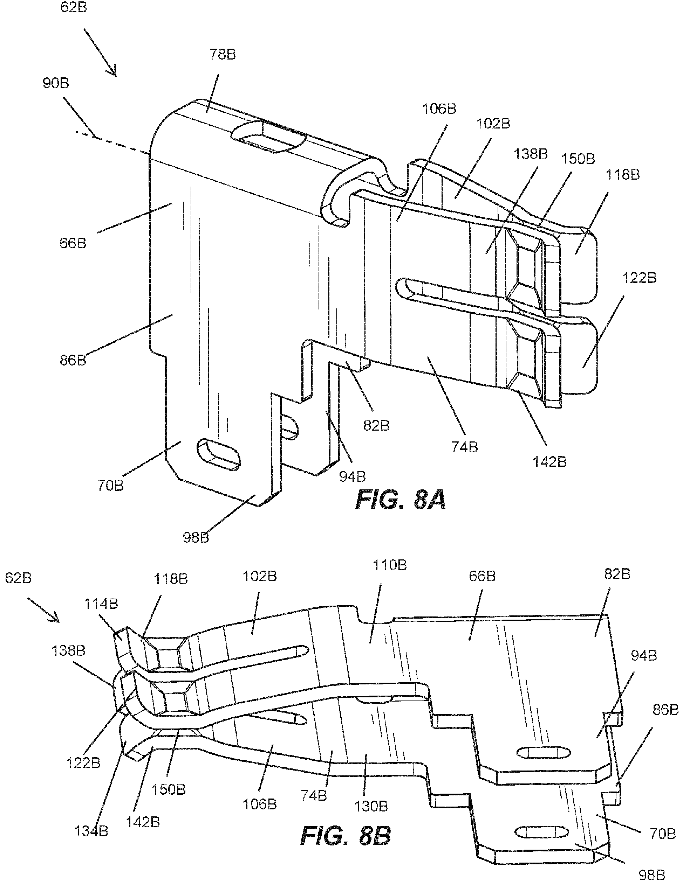

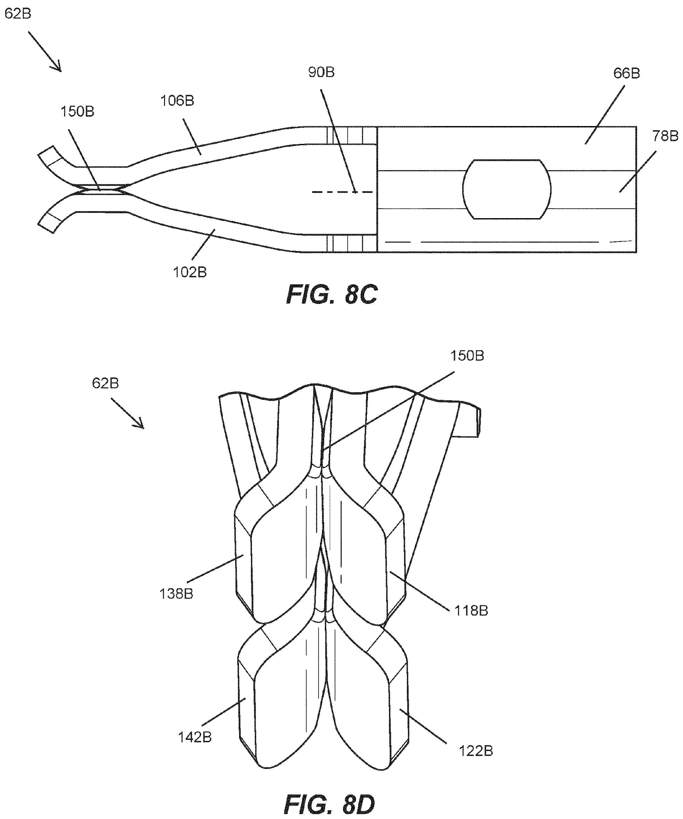

FIGS. 8A-8D illustrate an alternate embodiment of the battery terminal 62. The battery terminals 62B include a spine 66B with a base 70B extending along a first direction away from the spine 66B, and a connection portion 74B extending along a second direction perpendicular to the first direction. The spine 66B is generally U-shaped, such that the spine 66B defines a back 78B, a first side 82B extending from the back 78B, and a second side 86B extending from the back 78B. The spine 66B extends along a first axis 90B that is parallel to the second direction. The first side 82B and the second side 86B are parallel and extend in the first direction. In other embodiments, the spine 66B may form an alternative shape.

The base 70B includes a first base wall 94B and a second base wall 98B. The first base wall 94B is coplanar with the first side 82B of the spine 66B and the second base wall 98B is coplanar with a second side 86B of the spine 66B. The first base wall 94B and the second base wall 98B each include a mounting hole. The mounting holes are configured to couple the battery terminal 62B to the terminal block 50. In other embodiments, the base 70B may be laser welded onto the terminal block 50. In yet further embodiments, the base 70B may be coupled to the terminal block 50 with adhesive, traditional welding, or a similar coupling method. In order to couple the first base wall 94B and the second base wall 98B to the terminal block 50, the first and second base walls 94B, 98B may be bent such that the first base wall 94B is perpendicular to and extends away from the first side 82B of the spine 66B and the second base wall 98B is perpendicular to and extends away from the second side 86B of the spine 66B.

The connection portion 74B includes a first arm 102B and a second arm 106B. The first arm 102B and the second arm 106B extend from a first proximal end 110B to a first distal end 114B in the second direction. The first arm 102B and the second arm 106B are integrally coupled to the spine 66B at the first proximal end 110B. The first arm 102B and the second arm 106B are both split such that the first arm 102B defines a first pair of fingers 118B, 122B and the second arm 106B defines a second pair of fingers 138B, 142B. The first pair of fingers 118B, 122B includes a first top finger 118B and a first bottom finger 122B. The second pair of fingers 138B, 142B includes a second top finger 138B and a second bottom finger 142B. The split is defined proximate the first proximal end 110B. Therefore, the first and second pairs of fingers 118B, 122B, 138B, 142B are defined at the first distal end 114B. The connection portion 74B further includes a width defined between the first arm 102B and the second arm 106B. The width gradually decreases as the first and second arms 102B, 106B extend toward the first distal end 114B until the first and second arms 102B, 106B reach a connection point 150B. At the connection point 150B, the width is zero. Therefore, the first pair of fingers 118B, 122B and the second pair of fingers 138B, 142B are in contact at the connection point 150B. The connection point 150B is in close proximity with the first distal end 114B. The connection point 150B is intersected by the first axis 90B. Between the connection point 150B and the first distal end 114B, the first and second arms 102B, 106B flare away from each other. Therefore, at the first distal end 114B the width is greater than zero.

In some embodiments, the battery terminal 62B may be composed of an alloy, steel, or a similar metal. For example, the battery terminal 62B may be composed of C7035 alloy, C1808 alloy, high performance copper alloy, or the like.

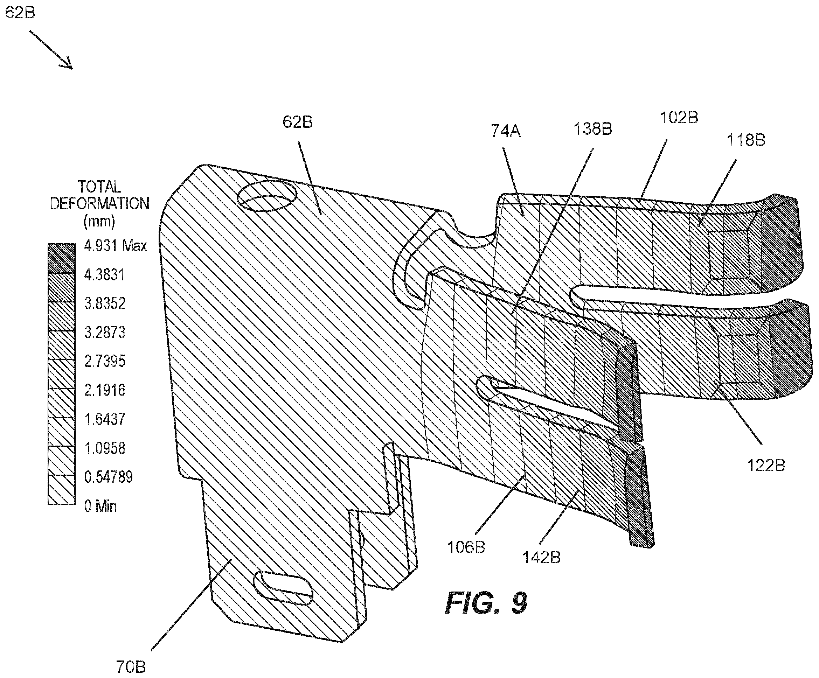

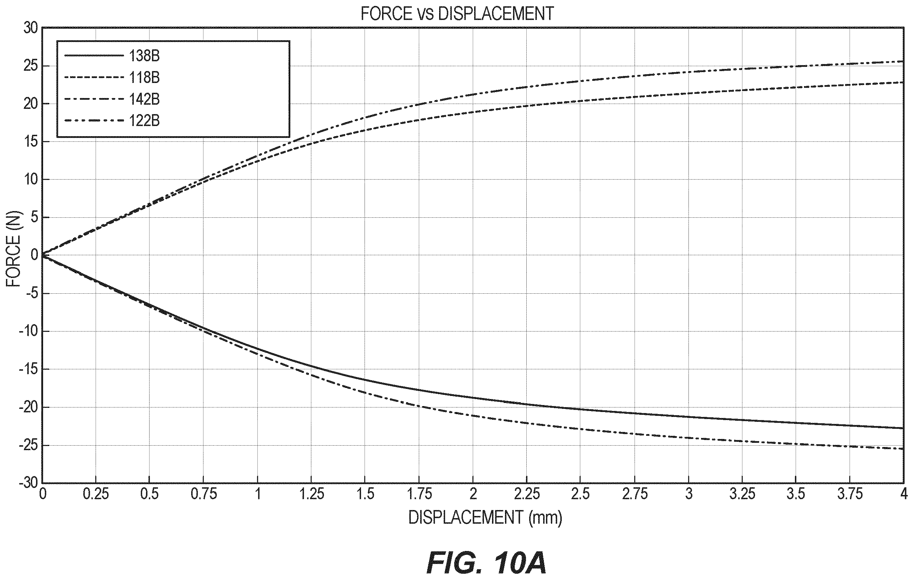

As shown in FIG. 9, the first and second pairs of fingers 118B, 122B, 138B, 142B are deformable. Deforming the fingers 118B, 122B, 138B, 142B allows the tool terminal of the tool to be inserted between the first arm 102B and the second arm 106B, creating an electrical connection between the battery and the tool. As shown in the graph of FIG. 10A, the first and second pairs of fingers 118B, 122B, 138B, 142B are displaced different amounts in response to a force separating the first arm 102B from the second arm 106B. Specifically, the first top finger 118B and the second top finger 138B require marginally less force than the first bottom finger 122B and the second bottom finger 142B in order to displace the fingers 118B, 122B, 138B, 142B the same amount. For example, when the battery terminal 62B is composed of high-performance copper alloy, to displace the fingers 118B, 122B, 138B, 142B 4mm, a force of approximately 23N must be applied to the first and second top fingers 118B, 138B and a force of 25N must be applied to the first and second bottom fingers 122B, 142B. In other embodiments, different forces may be applied to displace the fingers 118B, 122B, 138B, 142B 4mm. For example, the composition of the battery terminal 62B may affect the force required to displace the fingers 118B, 122B, 138B, 142B.

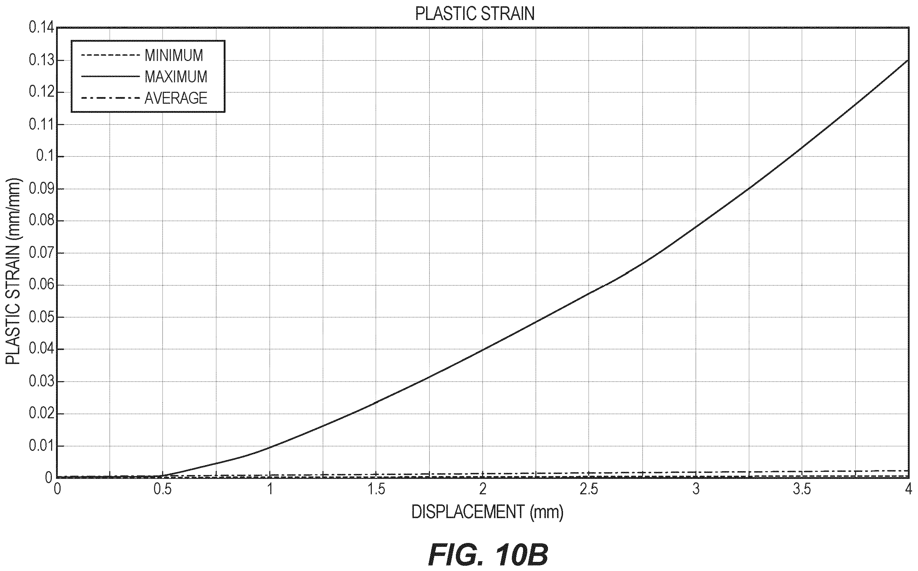

Further, as shown in the graph of FIG. 10B, when the battery terminal 62B is composed of high-performance copper alloy, the fingers 118B, 122B, 138B, 142B can be displaced up to 0.4mm without permanent deformation. Thereafter, strain on the fingers 118B, 122B, 138B, 142B increases as displacement increases, causing permanent deformation of the fingers 118B, 122B, 138B, 142B. In other embodiments, the amount of strain based on the displacement may differ. For example, the composition of the battery terminal 62B may affect the amount of strain based on the displacement.

To connect the battery terminal 62B to the tool, a blade of the tool terminal is inserted between the first arm 102B and the second arm 106B. Once the tool terminal is inserted, the first and second pairs of fingers 118B, 122B, 138B, 142B are in contact with the tool terminal at the connection point 150B. Due to the tool terminal being in contact with the fingers 118B, 122B, 138B, 142B, the tool terminal is electrically connected to the battery terminals 62B. Therefore, the tool is electrically connected to the battery terminals 62B.

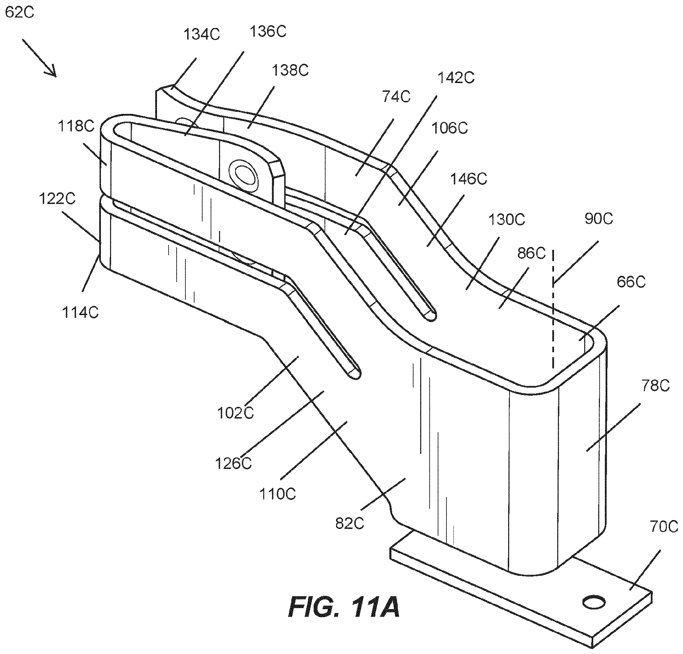

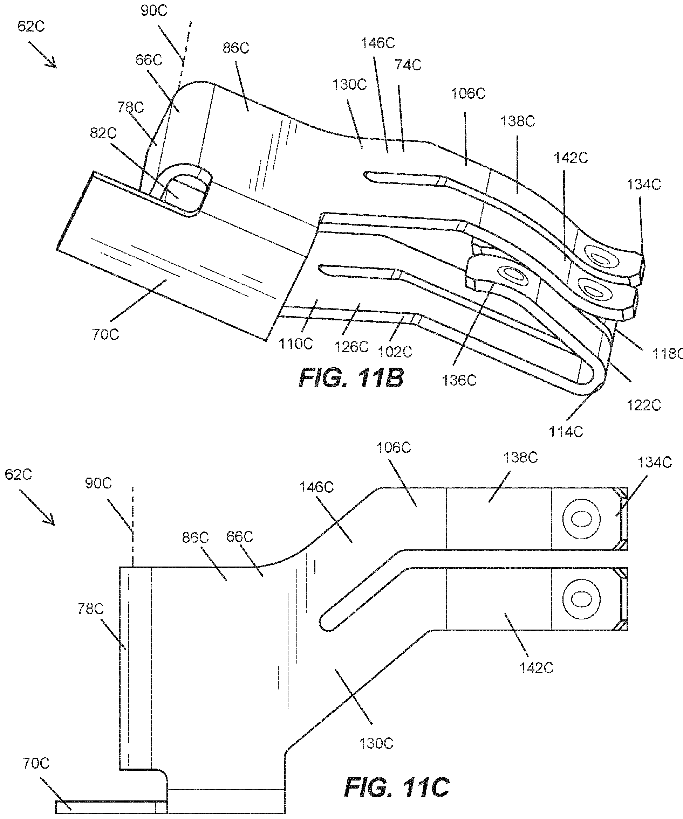

FIGS. 11A-11C illustrate an alternate embodiment of the battery terminal 62. The battery terminals 62C include a spine 66C with a base 70C extending along a first direction perpendicular to the base 70C, and a connection portion 74C extending along a second direction perpendicular to the first direction. The spine 66C is generally U-shaped, such that the spine 66C defines a back 78C, a first side 82C extending from the back 78C, and a second side 86C extending from the back 78C. The spine 66C extends along a first axis 90C that is perpendicular to the first direction and the second direction. The first side 82C and the second side 86C are parallel and extend in the second direction. In other embodiments, the spine 66C may form an alternative shape.

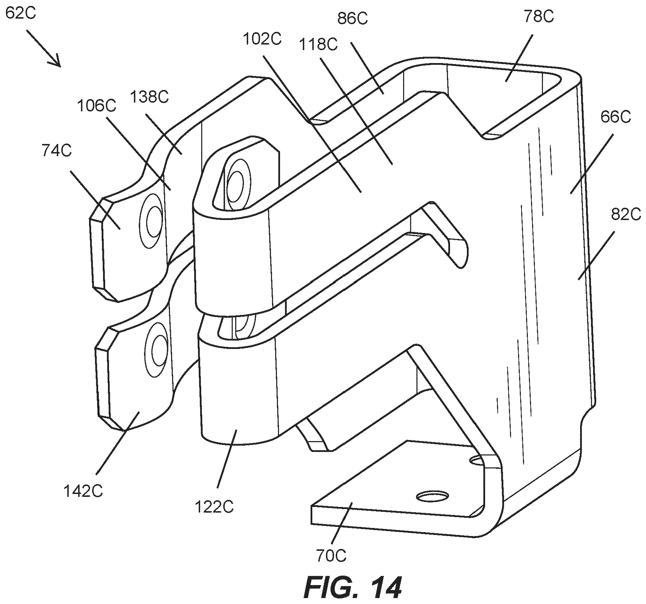

The base 70C is formed with the second side 86C of the spine 66C and extends in the first direction toward the first side 82C of the spine 66C. As shown in FIG. 14, in other embodiments, the base 70C may be formed with the first side 82C of the spine 66C and extend in the first direction toward the second side 86C of the spine 66C. Therefore, the base 70C creates a flat surface to support the battery terminal 62C in an upright position. The base 70C includes two mounting holes configured to couple the battery terminal 62C to the terminal block 50. In other embodiments, the base 70C may include more than or less than two mounting holes. In other embodiments, the base 70C may be laser welded onto the terminal block 50. In yet further embodiments, the base 70C may be integrally coupled to the terminal block 50 with adhesive, traditional welding, or a similar coupling method.

The connection portion 74C includes a first arm 102C and a second arm 106C. The first arm 102C extends from a first proximal end 110C to a first distal end 114C in the second direction. The first arm 102C is integrally coupled to the first side 82C of the spine 66C at the first proximal end 110C. The first arm 102C is split such that a first pair of fingers 118C, 122C is defined. The first pair of fingers 118C, 122C includes a first top finger 118C and a first bottom finger 122C. The split is defined proximate the first proximal end 110C. The first arm 102C further includes an angled portion 126C that includes the first proximal end 110C. The first arm 102C, and therefore the first pair of fingers 118C, 122C, are angled relative to the second direction in the angled portion 126C. The first arm 102C, and therefore the first pair of fingers 118C, 122C, extend in the second direction between the angled portion 126C and the first distal end 114C. At the first distal end 114C, the arm 102C, and therefore the first pair of fingers 118C, 122C, includes a curvature 136C. The curvature 134C is curved inward such that a face of the curvature points toward the first axis 90C. Therefore, the curvature 134C of the first arm 102C is generally J shaped.

The second arm 106C extend from a second proximal end 130C to a second distal end 134C in the second direction. The second arm 106C is integrally coupled to the second side 86C of the spine 66C at the second proximal end 130C. The second arm 106C is split such that a second pair of fingers 138C, 142C is defined. The second pair of fingers 138C, 142C includes a second top finger 138C and a second bottom finger 142C. The split is defined proximate the second proximal end 130C. The second arm 106C further includes an angled portion 146C that includes the second proximal end 130C. The second arm 106C, and therefore the second pair of fingers 138C, 142C, are angled relative to the second direction in the angled portion 146C. The second arm 106C, and therefore the second pair of fingers 138C, 142C, extend in the second direction between the angled portion 146C and the second distal end 134C. At the second distal end 134C, the second arm 106C is curved such that a distance between the first arm 102C and the second arm 106C at the second distal end 134C is less than a distance between the first am and the second arm 106C at the second proximal end 130C.

In some embodiments, the battery terminal 62C may be composed of an alloy, steel, or a similar metal. For example, the battery terminal 62C may be composed of C7035 alloy, C1808 alloy, high performance copper alloy, or the like.

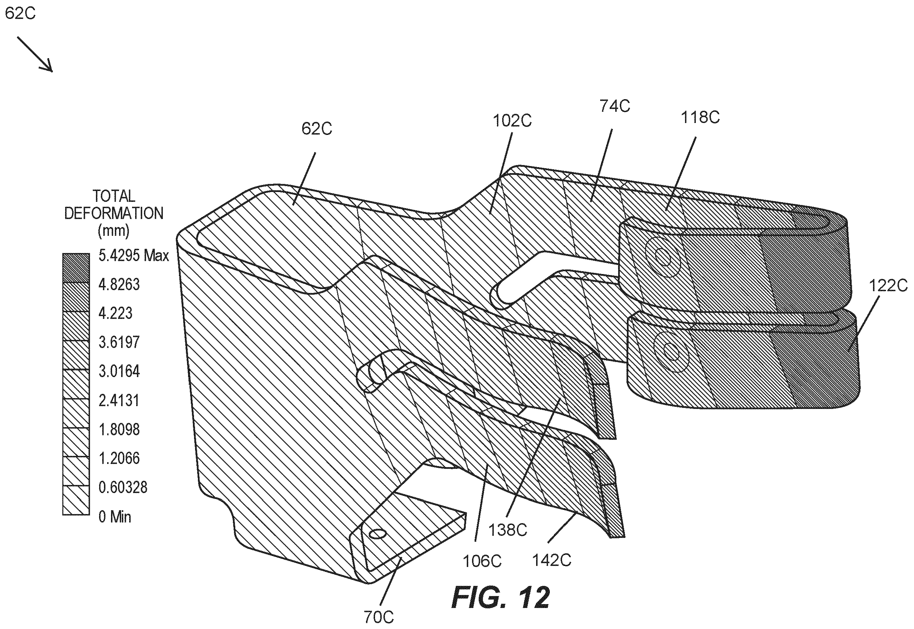

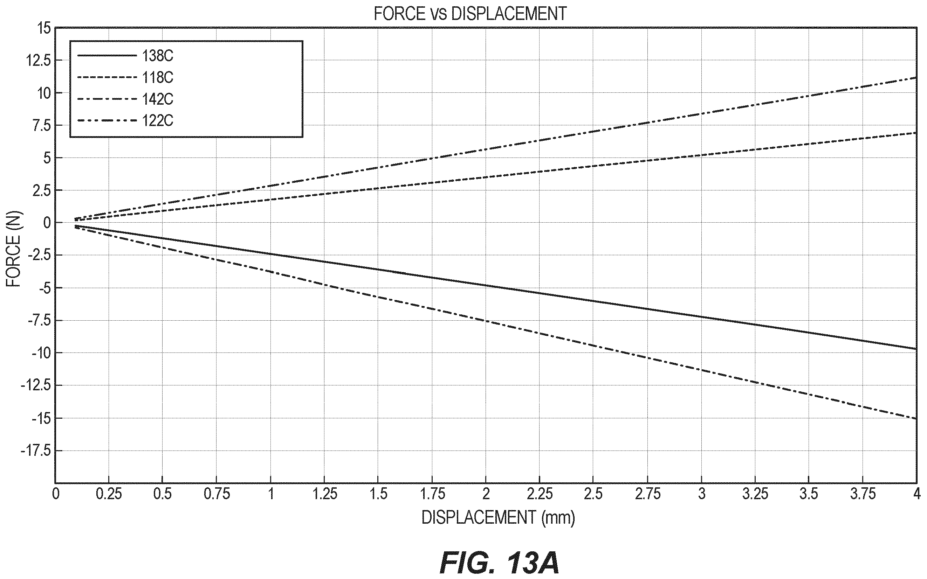

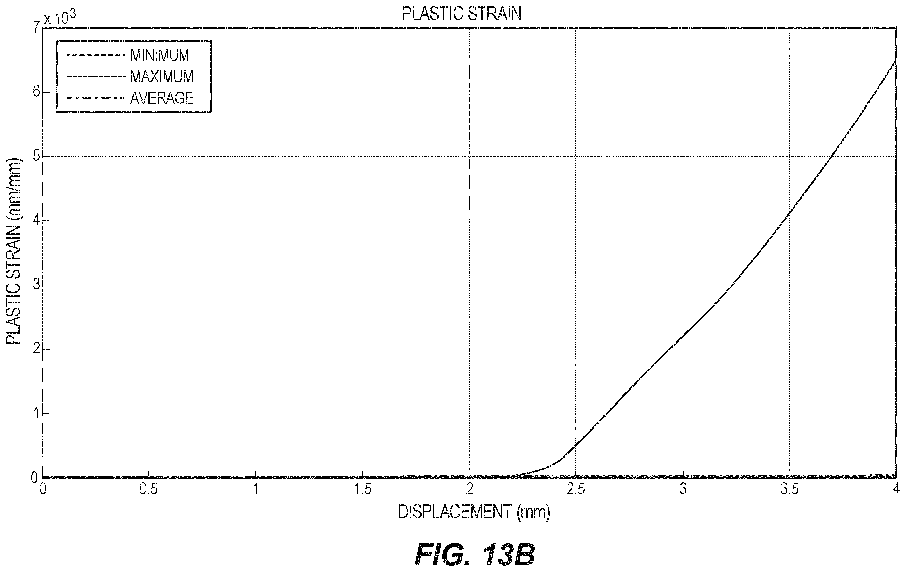

As shown in FIG. 12, the fingers 118C, 122C, 138C, 142C are deformable. Deforming the fingers 118C, 122C, 138C, 142C allows the tool terminal of the tool to be inserted between the first arm 102C and the second arm 106C, creating an electrical connection between the battery and the tool. As shown in the graph of FIG. 13A, the first and second pairs of fingers 118C, 122C, 138C, 142C are displaced different amounts in response to a force separating the first arm 102C from the second arm 106C. Specifically, to displace the fingers 118C, 122C, 138C, 142C the same amount, the first top finger 118C requires less force than the second top finger 138C, which requires less force than the first bottom finger 122C, which requires less force than the second bottom finger 142C. For example, when the battery terminal 62C is composed of 7035 alloy, to displace the fingers 118C, 122C, 138C, 142C 4mm, a force of approximately 7N must be applied to the first top finger 118C, a force of approximately 10N must be applied to the second top finger 138C, a force of approximately 11N must be applied to the first bottom finger 122C, and a force of approximately 15N must be applied to the second bottom finger 142C. In other embodiments, different forces may be applied to displace the fingers 118C, 122C, 138C, 142C 4mm. More specifically, the composition of the battery terminal 62C may affect the force required to displace the fingers 118C, 122C, 138C, 142C. For example, as shown in FIG. 13B, when the composition of the battery terminal 62C is C18080 alloy, the force required to displace the fingers 118C, 122C, 138C, 142C differs slightly than when the composition of the battery terminal 62C is 7035 alloy.

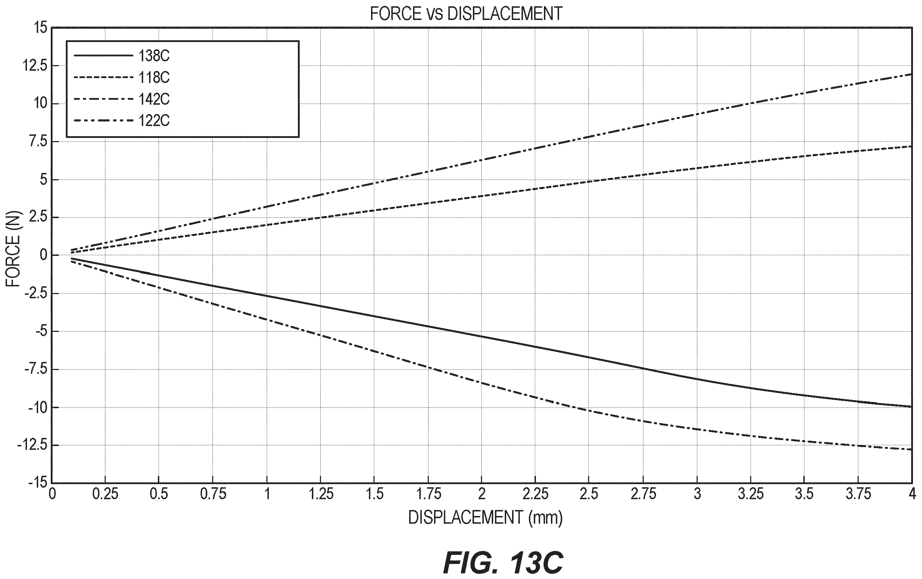

Further, as shown in the graph of FIG. 13C, when the battery terminal 62C is composed of 7035 alloy, the fingers 118C, 122C, 138C, 142C can be displaced up to 2mm without permanent deformation. Thereafter, strain on the fingers 118C, 122C, 138C, 142C increases as displacement increases, causing permanent deformation of the fingers 118C, 122C, 138C, 142C. In other embodiments, the amount of strain based on the displacement may differ. For example, when the battery terminal 62C is composed of C18080 alloy, the fingers 118C, 122C, 138C, 142C can be displaced 1.3mm without permanent deformation. Thereafter, strain on the fingers 118C, 122C, 138C, 142C increases as displacement increases, causing permanent deformation of the fingers 118C, 122C, 138C, 142C.

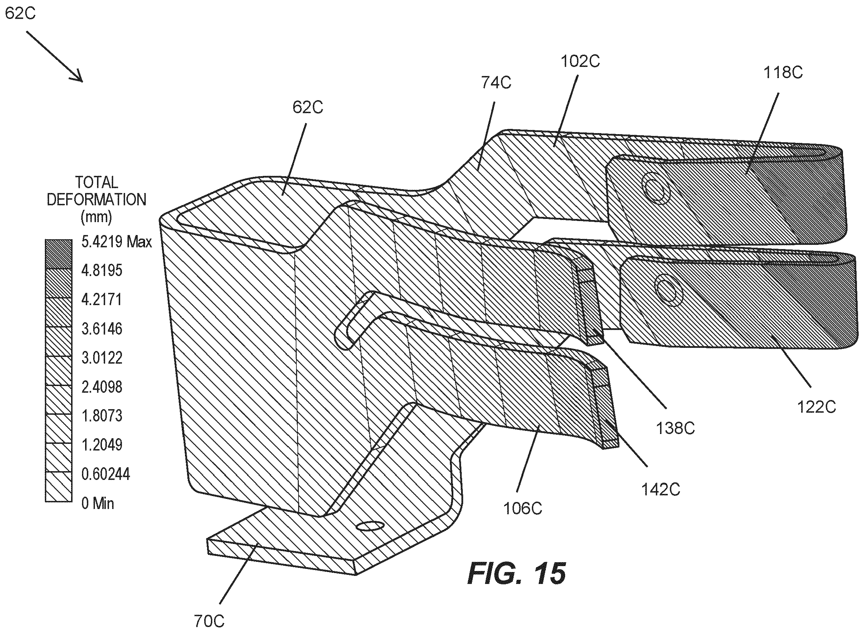

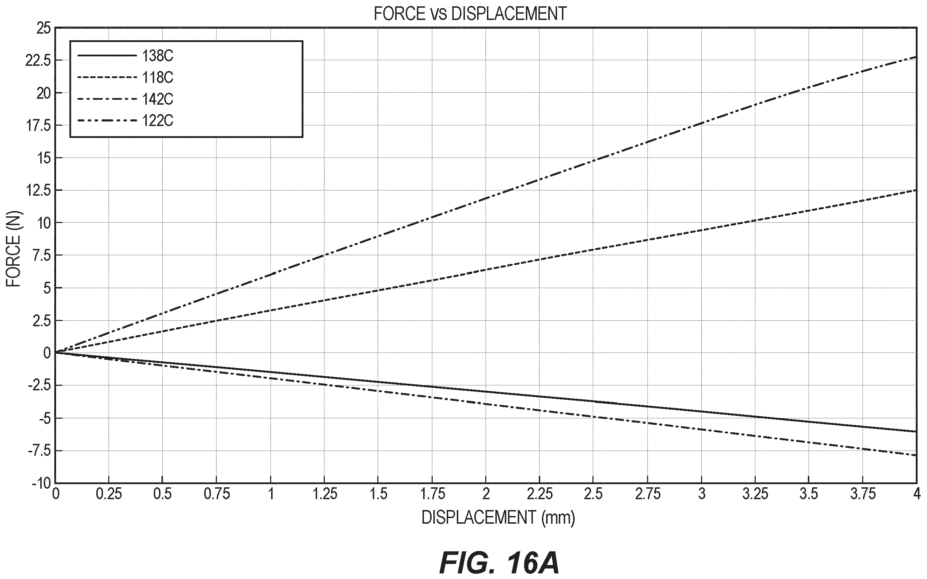

Similarly, the fingers 118C, 122C, 138C, 142C are deformable for the embodiment shown in FIGS. 14-15 with the base 70C being coupled to the first side 82C of the spine 66C. However, the amount of force required to deform each finger is different. As shown in the graph of FIG. 16A, the first and second pairs of fingers 118C, 122C, 138C, 142C are displaced different amounts in response to a force separating the first arm 102C from the second arm 106C. Specifically, to displace the fingers 118C, 122C, 138C, 142C the same amount, the second top finger 138C requires less force than the second bottom finger 142C, which requires less force than the first top finger 118C, which requires less force than the first bottom finger 122C. For example, when the battery terminal 62C is composed of 7035 alloy, to displace the fingers 118C, 122C, 138C, 142C 4mm, a force of approximately 6N must be applied to the second top finger 138C, a force of approximately 8N must be applied to the second bottom finger 142C, a force of approximately 12.5N must be applied to the first top finger 118C, and a force of approximately 22.5N must be applied to the first bottom finger 122C. In other embodiments, different forces may be applied to displace the fingers 118C, 122C, 138C, 142C 4mm. For example, the composition of the battery terminal 62C may affect the force required to displace the fingers 118C, 122C, 138C, 142C.

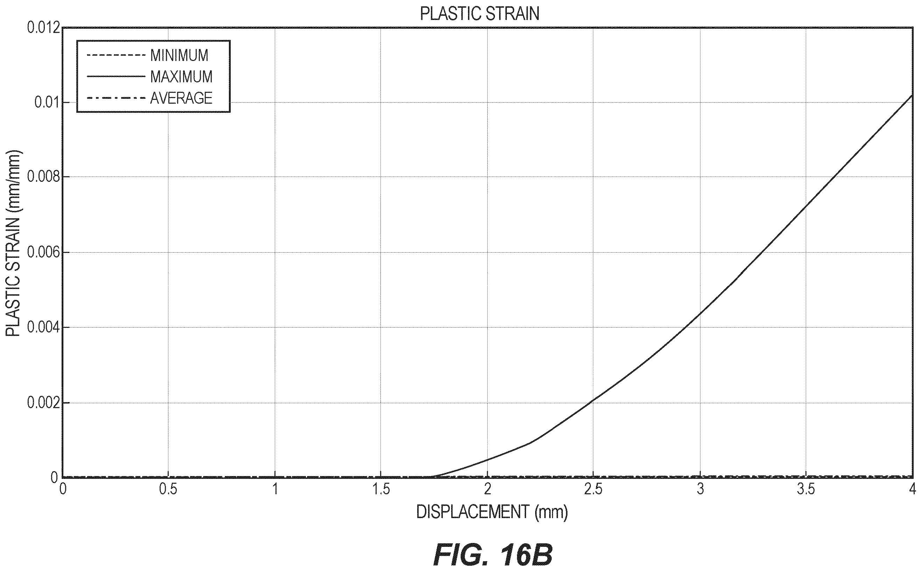

Further, as shown in the graph of FIG. 16B, when the battery terminal 62C is composed of 7035 alloy, the fingers 118C, 122C, 138C, 142C can be displaced up to 1.7mm without permanent deformation. Thereafter, strain on the fingers 118C, 122C, 138C, 142C increases as displacement increases, causing permanent deformation of the fingers 118C, 122C, 138C, 142C. In other embodiments, the amount of strain based on the displacement may differ. For example, the composition of the battery terminal 62C may affect the amount of strain based on the displacement.

To connect the battery terminal 62C to the tool, a blade of the tool terminal is inserted between the first arm 102C and the second arm 106C. Specifically, the tool terminal is inserted between the curvature 136C of the first arm 102C and the second arm 106C. Once the tool terminal is inserted, the first and second pairs of fingers 118C, 122C, 138C, 142C are in contact with the tool terminal. Due to the tool terminal being in contact with the fingers 118C, 122C, 138C, 142C, the tool terminal is electrically connected to the battery terminals 62C. Therefore, the tool is electrically connected to the battery terminals 62C. When used in this specification and claims, the terms "comprises" and "comprising" and variations thereof mean that the specified features, steps or integers are included. The terms are not to be interpreted to exclude the presence of other features, steps or components.

Various features and advantages of the invention are set forth in the following claims.

## Claims

1. A battery pack for powering a tool, the battery pack comprising:
a housing supporting a plurality of battery cells; and
a battery terminal for electrically connecting the battery pack to the tool, the battery terminal including,
a spine extending along an axis,
a first arm coupled to the spine,
a second arm coupled to the spine, wherein the first arm and the second arm are configured to receive a tool terminal of the tool therebetween, and wherein the first arm and the second arm extend along a direction perpendicular to the axis, and
a base coupled to the first arm and/or the second arm, the base electrically connected to the plurality of battery cells.

2. The battery pack of claim 1, wherein the first arm includes a first pair of fingers, and the second arm includes a second pair of fingers.

3. The battery pack of claim 2, wherein the first pair of fingers is in contact with the second pair of fingers at a connection point.

4. The battery pack of any preceding claim, wherein the first arm and the second arm extend between a proximal end and a distal end, and wherein a distance between the first arm and the second arm at the proximal end is greater than a distance between the first arm and the second arm at the distal end, preferably wherein the first arm is in contact with the second arm at a connection point, and wherein the connection point is proximate the distal end.

5. The battery pack of any preceding claim, wherein the spine includes a first side and a second side, and wherein the first side is parallel with the second side.

6. The battery pack of claim 5, wherein the first arm is integrally formed with the first side of the spine and the second arm is integrally formed with the second side of the spine.

7. The battery pack of claim 5 or 6, wherein the base includes a first base wall and a second base wall, and wherein the first base wall is integrally formed with the first side of the spine and the second base wall is integrally formed with the second side of the spine.

8. A battery pack for powering a tool, the battery pack comprising:
a housing supporting a plurality of battery cells; and
a battery terminal for electrically connecting the battery pack to the tool, the battery terminal having,
a spine extending along an axis,
a first arm coupled to the spine,
a second arm coupled to the spine, wherein the first arm and the second arm are configured to receive a tool terminal of the tool therebetween, and wherein the first arm and the second arm extend along a direction parallel to the axis, and
a base coupled to the first arm and/or the second arm, the base electrically connected to the plurality of battery cells.

9. The battery pack of claim 8, wherein the first arm includes a first pair of fingers, and the second arm includes a second pair of fingers, preferably wherein the first pair of fingers is in contact with the second pair of fingers at a connection point, and/or wherein the first arm and the second arm extend between a proximal end and a distal end, and wherein a distance between the first arm and the second arm at the proximal end is greater than a distance between the first arm and the second arm at the distal end.

10. The battery pack of claim 9, wherein the first arm is in contact with the second arm at a connection point, and wherein the connection point is proximate the distal end.

11. The battery pack of claim 8, 9 or 10, wherein the spine includes a first side and a second side, and wherein the first side is parallel with the second side.

12. The battery pack of claim 11, wherein the first arm is integrally formed with the first side of the spine and the second arm is integrally formed with the second side of the spine, or wherein the base includes a first base wall and a second base wall, and wherein the first base wall is integrally formed with the first side of the spine and the second base wall is integrally formed with the second side of the spine.

13. A battery pack for powering a tool, the battery pack comprising:
a housing supporting a plurality of battery cells; and
a battery terminal for electrically connecting the battery pack to the tool, the battery terminal having,
a spine extending along an axis,
a first arm coupled to the spine and including a first proximal end and a first distal end, and wherein the first arm is connected to the spine at the proximal end, and wherein the first arm includes a curvature nearer to the distal end than to the proximal end,
a second arm coupled to the spine, wherein the first arm and the second arm are configured to receive a tool terminal of the tool therebetween, and
a base coupled to the first arm and/or the second arm, the base electrically connected to the plurality of battery cells,
wherein the curvature defines a face pointing in a direction toward the axis.

14. The battery pack of claim 13, wherein the spine includes a first side and a second side, and wherein the first side is parallel with the second side, preferably wherein the base is integrally formed with the first side of the spine, and wherein the base extends in a direction perpendicular to the axis toward the second side.

15. The battery pack of claim 13 or 14, wherein the base is integrally formed with the second side of the spine, and wherein the base extends in a direction perpendicular to the axis toward the first side.

## Patentansprüche

1. Batteriepack zum Antreiben eines Werkzeugs, wobei das Batteriepack umfasst:
ein Gehäuse, das eine Vielzahl von Batteriezellen trägt; und
eine Batterieklemme zum elektrischen Verbinden des Batteriepacks mit dem Werkzeug, wobei die Batterieklemme einschließt:
ein Rückgrat, das sich entlang einer Achse erstreckt,
einen ersten Arm, der an das Rückgrat gekoppelt ist,
einen zweiten Arm, der an das Rückgrat gekoppelt ist, wobei der erste Arm und der zweite Arm dazu konfiguriert sind, eine Werkzeugklemme des Werkzeugs dazwischen aufzunehmen, und wobei sich der erste Arm und der zweite Arm entlang einer Richtung erstrecken, die senkrecht zu der Achse ist, und
eine Basis, die an den ersten Arm und/oder den zweiten Arm gekoppelt ist,
wobei die Basis mit der Vielzahl von Batteriezellen elektrisch verbunden ist.

2. Batteriepack nach Anspruch 1, wobei der erste Arm ein erstes Paar von Fingern einschließt und der zweite Arm ein zweites Paar von Fingern einschließt.

3. Batteriepack nach Anspruch 2, wobei das erste Paar von Fingern an einem Verbindungspunkt in Kontakt mit dem zweiten Paar von Fingern ist.

4. Batteriepack nach einem vorhergehenden Anspruch, wobei sich der erste Arm und der zweite Arm zwischen einem proximalen Ende und einem distalen Ende erstrecken, und wobei ein Abstand zwischen dem ersten Arm und dem zweiten Arm an dem proximalen Ende größer als ein Abstand zwischen dem ersten Arm und dem zweiten Arm an dem distalen Ende ist, vorzugsweise wobei der erste Arm an einem Verbindungspunkt in Kontakt mit dem zweiten Arm ist, und wobei der Verbindungspunkt nahe dem distalen Ende ist.

5. Batteriepack nach einem vorhergehenden Anspruch, wobei das Rückgrat eine erste Seite und eine zweite Seite einschließt, und wobei die erste Seite parallel zu der zweiten Seite ist.

6. Batteriepack nach Anspruch 5, wobei der erste Arm integral mit der ersten Seite des Rückgrats ausgebildet ist und der zweite Arm integral mit der zweiten Seite des Rückgrats ausgebildet ist.

7. Batteriepack nach Anspruch 5 oder 6, wobei die Basis eine erste Basiswand und eine zweite Basiswand einschließt, und wobei die erste Basiswand integral mit der ersten Seite des Rückgrats ausgebildet ist und die zweite Basiswand integral mit der zweiten Seite des Rückgrats ausgebildet ist.

8. Batteriepack zum Antreiben eines Werkzeugs, wobei das Batteriepack umfasst:
ein Gehäuse, das eine Vielzahl von Batteriezellen trägt; und
eine Batterieklemme zum elektrischen Verbinden des Batteriepacks mit dem Werkzeug, wobei die Batterieklemme aufweist:
ein Rückgrat, das sich entlang einer Achse erstreckt,
einen ersten Arm, der an das Rückgrat gekoppelt ist,
einen zweiten Arm, der an das Rückgrat gekoppelt ist, wobei der erste Arm und der zweite Arm dazu konfiguriert sind, eine Werkzeugklemme des Werkzeugs dazwischen aufzunehmen, und wobei sich der erste Arm und der zweite Arm entlang einer Richtung erstrecken, die parallel zu der Achse ist, und
eine Basis, die an den ersten Arm und/oder den zweiten Arm gekoppelt ist,
wobei die Basis mit der Vielzahl von Batteriezellen elektrisch verbunden ist.

9. Batteriepack nach Anspruch 8, wobei der erste Arm ein erstes Paar von Fingern einschließt und der zweite Arm ein zweites Paar von Fingern einschließt, vorzugsweise wobei das erste Paar von Fingern an einem Verbindungspunkt in Kontakt mit dem zweiten Paar von Fingern ist, und/oder wobei sich der erste Arm und der zweite Arm zwischen einem proximalen Ende und einem distalen Ende erstrecken, und wobei ein Abstand zwischen dem ersten Arm und dem zweiten Arm an dem proximalen Ende größer als ein Abstand zwischen dem ersten Arm und dem zweiten Arm an dem distalen Ende ist.

10. Batteriepack nach Anspruch 9, wobei der erste Arm an einem Verbindungspunkt in Kontakt mit dem zweiten Arm ist, und wobei der Verbindungspunkt nahe dem distalen Ende ist.

11. Batteriepack nach Anspruch 8, 9 oder 10, wobei das Rückgrat eine erste Seite und eine zweite Seite einschließt, und wobei die erste Seite parallel zu der zweiten Seite ist.

12. Batteriepack nach Anspruch 11, wobei der erste Arm integral mit der ersten Seite des Rückgrats ausgebildet ist und der zweite Arm integral mit der zweiten Seite des Rückgrats ausgebildet ist, oder wobei die Basis eine erste Basiswand und eine zweite Basiswand einschließt, und wobei die erste Basiswand integral mit der ersten Seite des Rückgrats ausgebildet ist und die zweite Basiswand integral mit der zweiten Seite des Rückgrats ausgebildet ist.

13. Batteriepack zum Antreiben eines Werkzeugs, wobei das Batteriepack umfasst:
ein Gehäuse, das eine Vielzahl von Batteriezellen trägt; und
eine Batterieklemme zum elektrischen Verbinden des Batteriepacks mit dem Werkzeug, wobei die Batterieklemme aufweist:
ein Rückgrat, das sich entlang einer Achse erstreckt,
einen ersten Arm, der an das Rückgrat gekoppelt ist und ein erstes proximales Ende und ein erstes distales Ende einschließt, und wobei der erste Arm mit dem Rückgrat an dem proximalen Ende verbunden ist, und wobei der erste Arm eine Biegung näher zu dem distalen Ende als zu dem proximalen Ende einschließt,
einen zweiten Arm, der an das Rückgrat gekoppelt ist, wobei der erste Arm und der zweite Arm dazu konfiguriert sind, eine Werkzeugklemme des Werkzeugs dazwischen aufzunehmen, und
eine Basis, die an den ersten Arm und/oder den zweiten Arm gekoppelt ist,
wobei die Basis mit der Vielzahl von Batteriezellen elektrisch verbunden ist,
wobei die Biegung eine Fläche definiert, die in eine Richtung zu der Achse hin weist.

14. Batteriepack nach Anspruch 13, wobei das Rückgrat eine erste Seite und eine zweite Seite einschließt, und wobei die erste Seite parallel zu der zweiten Seite ist, vorzugsweise wobei die Basis integral mit der ersten Seite des Rückgrats ausgebildet ist, und wobei sich die Basis in einer Richtung erstreckt, die senkrecht zu der Achse zu der zweiten Seite hin ist.

15. Batteriepack nach Anspruch 13 oder 14, wobei die Basis integral mit der zweiten Seite des Rückgrats ausgebildet ist, und wobei sich die Basis in einer Richtung erstreckt, die senkrecht zu der Achse zu der ersten Seite hin ist.

## Revendications

1. Bloc-batterie destiné à alimenter un outil, le bloc-batterie comprenant :
un boîtier supportant une pluralité d'éléments de batterie ; et
une borne de batterie destinée à connecter électriquement le bloc-batterie à l'outil, la borne de batterie comprenant :
une âme s'étendant le long d'un axe,
un premier bras couplé à l'âme,
un deuxième bras couplé à l'âme, le premier bras et le deuxième bras étant configurés pour recevoir entre eux une borne d'outil de l'outil, et le premier bras et le deuxième bras s'étendant dans une direction perpendiculaire à l'axe, et
une base couplée au premier bras et/ou au deuxième bras, la base étant connectée électriquement à la pluralité d'éléments de batterie.

2. Bloc-batterie selon la revendication 1, dans lequel le premier bras comprend une première paire de doigts, et le deuxième bras comprend une deuxième paire de doigts.

3. Bloc-batterie selon la revendication 2, dans lequel la première paire de doigts est en contact avec la deuxième paire de doigts en un point de connexion.

4. Bloc-batterie selon l'une quelconque des revendications précédentes, dans lequel le premier bras et le deuxième bras s'étendent entre une extrémité proximale et une extrémité distale, et dans lequel une distance entre le premier bras et le deuxième bras au niveau de l'extrémité proximale est supérieure à une distance entre le premier bras et le deuxième bras au niveau de l'extrémité distale, de préférence dans lequel le premier bras est en contact avec le deuxième bras en un point de connexion, et dans lequel le point de connexion est situé à proximité de l'extrémité distale.

5. Bloc-batterie selon l'une quelconque des revendications précédentes, dans lequel l'âme comprend un premier côté et un deuxième côté, et dans lequel le premier côté est parallèle au deuxième côté.

6. Bloc-batterie selon la revendication 5, dans lequel le premier bras est formé d'un seul tenant avec le premier côté de l'âme et le deuxième bras est formé d'un seul tenant avec le deuxième côté de l'âme.

7. Bloc-batterie selon la revendication 5 ou 6, dans lequel la base comprend une première paroi de base et une deuxième paroi de base, et dans lequel la première paroi de base est formée d'un seul tenant avec le premier côté de l'âme et la deuxième paroi de base est formée d'un seul tenant avec le deuxième côté de l'âme.

8. Bloc-batterie destiné à alimenter un outil, le bloc-batterie comprenant :
un boîtier supportant une pluralité d'éléments de batterie ; et
une borne de batterie destinée à connecter électriquement le bloc-batterie à l'outil, la borne de batterie comportant :
une âme s'étendant le long d'un axe,
un premier bras couplé à l'âme,
un deuxième bras couplé à l'âme, le premier bras et le deuxième bras étant configurés pour recevoir entre eux une borne d'outil de l'outil, et le premier bras et le deuxième bras s'étendant dans une direction parallèle à l'axe, et
une base couplée au premier bras et/ou au deuxième bras, la base étant connectée électriquement à la pluralité d'éléments de batterie.

9. Bloc-batterie selon la revendication 8, dans lequel le premier bras comprend une première paire de doigts et le deuxième bras comprend une deuxième paire de doigts, de préférence dans lequel la première paire de doigts est en contact avec la deuxième paire de doigts en un point de connexion, et/ou dans lequel le premier bras et le deuxième bras s'étendent entre une extrémité proximale et une extrémité distale, et dans lequel une distance entre le premier bras et le deuxième bras au niveau de l'extrémité proximale est supérieure à une distance entre le premier bras et le deuxième bras au niveau de l'extrémité distale.

10. Bloc-batterie selon la revendication 9, dans lequel le premier bras est en contact avec le deuxième bras en un point de connexion, et dans lequel le point de connexion est situé à proximité de l'extrémité distale.

11. Bloc-batterie selon la revendication 8, 9 ou 10, dans lequel l'âme comprend un premier côté et un deuxième côté, le premier côté étant parallèle au deuxième côté.

12. Bloc-batterie selon la revendication 11, dans lequel le premier bras est formé d'un seul tenant avec le premier côté de l'âme et le deuxième bras est formé d'un seul tenant avec le deuxième côté de l'âme, ou dans lequel la base comprend une première paroi de base et une deuxième paroi de base, et dans lequel la première paroi de base est formée d'un seul tenant avec le premier côté de l'âme et la deuxième paroi de base est formée d'un seul tenant avec le deuxième côté de l'âme.

13. Bloc-batterie destiné à alimenter un outil, le bloc-batterie comprenant :
un boîtier supportant une pluralité d'éléments de batterie ; et
une borne de batterie destinée à connecter électriquement le bloc-batterie à l'outil, la borne de batterie comportant :
une âme s'étendant le long d'un axe,
un premier bras couplé à l'âme et comprenant une première extrémité proximale et une première extrémité distale, le premier bras étant raccordé à l'âme au niveau de l'extrémité proximale, et le premier bras comportant une courbure plus proche de l'extrémité distale que de l'extrémité proximale,
un deuxième bras couplé à l'âme, le premier bras et le deuxième bras étant configurés pour recevoir entre eux une borne d'outil de l'outil, et
une base couplée au premier bras et/ou au deuxième bras, la base étant connectée électriquement à la pluralité d'éléments de batterie,
dans lequel la courbure délimite une face orientée en direction de l'axe.

14. Bloc-batterie selon la revendication 13, dans lequel l'âme comprend un premier côté et un deuxième côté, et dans lequel le premier côté est parallèle au deuxième côté, de préférence dans lequel la base est formée d'un seul tenant avec le premier côté de l'âme et dans lequel la base s'étend dans une direction perpendiculaire à l'axe vers le deuxième côté.

15. Bloc-batterie selon la revendication 13 ou 14, dans lequel la base est formée d'un seul tenant avec le deuxième côté de l'âme et dans lequel la base s'étend dans une direction perpendiculaire à l'axe vers le premier côté.
